# EUROPÄISCHE PATENTSCHRIFT

(11) **EP 3 887 728 B1**
(45) Veröffentlichungstag und Bekanntmachung des Hinweises auf die Patenterteilung: **27.03.2024**
(21) Anmeldenummer: 18810982.1
(22) Anmeldetag: 26.11.2018
(51) Int. Cl.: H05B 3/26, H05B 3/22, F24D 3/12, F24D 3/16, E04C 2/52, F24D 13/02, H05B 3/20

(54) **MODULARES PLATTENELEMENT ZUM ERSTELLEN EINER WANDHEIZUNG UND SYSTEM ZUM MODULAREN ERSTELLEN EINER WAND AUS WANDHEIZUNGSELEMENTEN**
MODULAR PLATE ELEMENT FOR CREATING A WALL HEATER AND SYSTEM FOR MODULARLY CREATING A WALL CONSISTING OF WALL HEATING ELEMENTS
ÉLÉMENT MODULAIRE EN FORME DE PLAQUE POUR RÉALISER UN CHAUFFAGE MURAL ET SYSTÈME POUR LA RÉALISATION MODULAIRE D'UNE PAROI EN ÉLÉMENTS CHAUFFANTS MURAUX

(43) Veröffentlichungstag der Anmeldung: 06.10.2021
(73) Patentinhaber: Plasch, Michael, 9074 Keutschach (AT)
(72) Erfinder: Plasch, Michael, 9074 Keutschach (AT)
(74) Vertreter: DTS Patent- und Rechtsanwälte Schnekenbühl und Partner mbB
(86) Internationale Anmeldenummer: PCT/EP2018/082514
(87) Internationale Veröffentlichungsnummer: WO 2020/108724

(56) Entgegenhaltungen:
- WO-A1-2009/055959
- DE-U1-202014 009 377
- DE-U1-202016 107 401
- US-A1- 2002 168 184

## Beschreibung

Die vorliegende Erfindung betrifft ein modulares Plattenelement zum Erstellen einer Wand, einer Decke und/oder eines Bodens eines Raumes und ein System zum modularen Erstellen einer Wand, einer Decke und/oder eines Bodens eines Raumes.

Im Stand der Technik werden z. B. im Bereich der Infrarot-Heizungen verschiedene Technologien eingesetzt, die vor allem auf der Basis unterschiedlicher Temperaturen zwischen Heizoberfläche und zu heizender Oberfläche und damit einhergehend unterschiedlicher Flächen der Heizelemente sowie stark differierenden Schalthysteresen agieren.

Aus der DE 20 2016 107 401 A1 ist ein Heizsystem bekannt, bei dem ein Isolations-/Reflexionselement an einer Wand eines Raumes angebracht wird. Ein elektrisches Heizelement zum Erzeugen von Infrarot-Strahlung umfasst ein Substrat und eine darauf angeordnete Heizschicht. Ferner ist zwischen dem Isolations-/Reflexionselement und dem Heizelement ein Abstandselement angeordnet.

Ferner ist aus der DE 20 2014 009 377 U1 ein ein Wandelement mit integrierter elektrischer Beheizung bekannt. Dabei wird eine Gipsplatte mit einer carbonfaserhaltigen Beschichtung und einer hochglänzenden Aluminiumfolie versehen. Die Platte wird auf einer Unterkonstruktion aus Holzlatten montiert.

Die Wärmeleitung durch das Medium ist bei allen am Markt bekannten Systemen nicht gerichtet oder definiert, sondern folgt in allen drei Dimensionen den Temperaturgradienten innerhalb des Materials.

Die Steuerung von Wärmeleitung ist beispielsweise möglich durch:
- Veränderung des Materialleitwertgradienten innerhalb eines ansonsten homogenen Materials durch Veränderung des Materials innerhalb der Dämmschicht;
- Steuerung der Wärmezufuhr durch mechanischen Transport von Flüssigkeiten mit hoher Wärmespeicherfähigkeit mit Hilfe von Mess- und Regeltechnik;
- Veränderung der Einleitpunkte von Wärme durch Steuerung der Heizschichten für konduktives, strahlungsbasiertes oder konvektives Heizen.

Alle Optionen bedingen einen sehr hohen technischen Aufwand und stellen keine befriedigenden Lösungen dar. Vor allem vor dem Hintergrund, dass Wärmeleitung in Feststoffen nicht durch die Gravitation beeinflusst wird. Dies hat zur Folge, dass die Wärmeausbreitung mehr oder weniger unkontrolliert in zu beheizenden Räumen erfolgt.

Der Verlust an Steuerkontrolle resultiert in einer hohen Ausleitung an Wärme aus dem zu beheizenden Raum, an Orten an denen massegebundener Energietransfer stattfindet und an Orten an denen der Temperaturgradient hohe Abweichungen in Temperaturdifferenzen zwischen Außenbereich und Heizbereich aufweist.

Daher ist es Aufgabe der vorliegenden Erfindung, ein modulares Plattenelement zum Erstellen einer Wand, einer Decke und/oder eines Bodens eines Raumes und ein System zum modularen Erstellen einer Wand, einer Decke und/oder eines Bodens eines Raumes anzugeben, welches es erlaubt, mit niedrigem Aufwand zu heizen und dabei die Verluste so gering als möglich zu halten, sowie den Wärmefluss zu kontrollieren und gleichzeitig einen hohen Strahlungsanteil zu erreichen, der optimale Verteilung von Wärme im zu beheizenden Raum erlaubt.

Diese Aufgabe wird erfindungsgemäß durch die Merkmale der unabhängigen Patentansprüche gelöst. Weitere vorteilhafte Weiterbildungen sind Gegenstand der Unteransprüche.

Die günstigste Technologie ist dabei stets im thermodynamischen Sinne diejenige, welche gleichzeitig eine große Fläche an den kältesten Stellen der Außenwand bis zur Raumtemperatur aufheizt, dabei besonders kurze Schaltzeiten im Sekundenbereich nutzt und gleichzeitig eine besonders gute Wärmeverteilung auf der Innenseite der Außenwand erreicht.

Strahlungen, die bei Raumtemperatur emittiert werden, haben dabei den Vorteil, dass die niedrigst mögliche Energie der Infrarotphotonen abgegeben wird, da diese Energie im Wesentlichen von der Temperatur der emittierenden Oberfläche abhängt. Damit wird die Strahlung identisch derjenigen Strahlung, die von anderen Flächen im Raum remittiert werden, was man in der Branche als Sekundärstrahlung bezeichnet.

Die der vorliegenden Erfindung zugrundeliegende Idee besteht vorzugsweise darin, dass in jeder Flächenheizung die Heizfläche begrenzt ist und dass deshalb die thermische Weitergabe von Wärme innerhalb einer Wand, eines Bodens und/oder einer Decke auf Bereiche neben der eigentlichen Heizfläche erweitert werden soll.

Dabei ist es günstig, kurz zusammengefasst, ein modulares Plattenelement zu verwenden, durch das ein Trägermedium bzw. Fluid, wie Luft, einen Wärmetransport durch Konduktion und massegebundenen Energietransport zulässt, um damit ohne weiteren technischen Steueraufwand den Wärmetransport in andere Bereiche der Wand / des Bodens / der Decke zulässt und unterstützt, die höher temperiert werden sollen.

Ferner ermöglicht das modulare Plattensystem durch Ausbildung von mindestens einer Kammer, den Wärmetransport bewusst zu richten und so auch Wärmestauungen hinter z. B. Schränken oder anderen Möbeln zu verhindern.

Erfindungsgemäß umfasst bei der vorliegenden Erfindung ein modulares Plattenelement zum zumindest teilweise Erstellen einer Wand, einer Decke und/oder eines Bodens eines Raumes:
- ein erstes Trägerelement mit mindestens einer Kammer zur mechanischen Stabilisierung und zum Transport von Wärme mithilfe eines Fluides,
- einen Heizanstrich zum Beheizen des Raumes mit Niedertemperatur-Infrarot-Technik, wobei der Heizanstrich ein elektrisch leitfähiges Stoffgemisch umfasst, und
- ein Reflexionselement zur Reflektion von Infrarotstrahlung.

Ein derartiges modulares Plattenelement weist in Kombination mit einem Heizanstrich, insbesondere einem nadelbasierten Heizanstrich, eine Lebensdauer auf, die um ein Vielfaches länger ist, als die der üblichen und bekannten Heizsysteme. Der Heizanstrich wird bevorzugt durch Aufmalen aufgebracht, insbesondere durch Aufmalen mit einer Walze. Anders als bei der manuellen Montage von Heizanstrich direkt auf die Wand wird hierdurch eine höhere Gleichmäßigkeit beim Auftrag erreicht und es werden Stellen vermieden, bei denen Heizanstrich in höherer Konzentration vorliegt, d.h. es werden "Hotspots" vermieden, die dann beim Betrieb eine erhöhte Temperatur aufweisen könnten.

Durch die Reflexionsschicht wird die Wärmestrahlung in den Raum geleitet und damit muss keine Aufheizung der Mauer mehr erfolgen.

Bevorzugt werden die modularen Plattenelemente mit Abstand zur Mauer montiert. Bevorzugt umfasst das modulare Plattenelement poröse Materialen. Dadurch wird effektive Schimmelbildung vermieden. Die Plattenelemente können miteinander verklebt werden oder durch ein Klicksystem oder ein Ständersystem verbunden werden. Bevorzugt werden die benachbart montierten Plattenelemente nach Montage verspachtelt. Bevorzugt werden benachbarte modulare Plattenelement auch elektrisch miteinander verbunden, indem die benachbarten Bereiche mit Heizanstrich der benachbarten Platten elektrisch miteinander verbunden werden, bevorzugt über eine elektrische Verbindung von Kupferbändern, die unter dem Heizanstrich angeordnet sind. Besonders bevorzugt geschieht dies durch einen Kupferverbinder, der die beiden Kupferbänder der benachbarten Plattenelemente miteinander elektrisch verbinden.

Die Einsatzgebiete für das erfindungsgemäße modulare Plattenelement sind beispielhaft nachfolgend aufgelistet:
- Heizung zur Zonenheizung oder Vollheizung von Wohn- und Arbeitsumgebungen, die nach der Einrichtung zum Support nicht mehr zugänglich sind;
- Heizung in Oberflächen, die jeweils eigenständig die Bausubstanz, also die Wand darstellen;
- Heizung besonders gefährdeter Oberflächen, die durch Nacharbeiten bei Leistungsverlust beschädigt werden;
- Heizung von Räumen mit komplexer Temperaturverteilung in der Sekundärstrahlung;
- Beheizung und Temperierung von wärmestaugefährdeten Bereichen von Wänden Boden und Decke;
- Beheizung von Räumen, die Rissbildungen begünstigen;
- Beheizung und Temperierung zur Schimmel- und Feuchtesanierung;
- Beheizung von Niedrigenergiehäusern auf voller Fläche ohne zu hohe Heizungsfläche;
- Dämmen von Flächen, die beheizt oder unbeheizt sein können;
- Klimatisierung und Kühlung von Flächen;
- Trockenbauersatz;
- Schalldämmung großer Flächen;
- Mehrfachnutzen eines Wandmaterials bei Neubau, Sanierung, Brandschutz, Schallschutz und Beheizung;
- Verwendung des Plattenelements mit gängigen Putz und Anstrichen.

Neben dem Beheizen kann mithilfe des erfindungsgemäßen modularen Plattenelements auch ein Kühlen einer Fläche realisiert werden. Mithilfe der mindestens einen Kammer kann nämlich ein Wärmetransport in verschiedene Richtungen entlang der Ebene des Plattenelements gewährleistet werden, sodass Wärme von einem Ort mit hoher Wärme zu einem Ort mit geringerer Wärme und umgekehrt getauscht werden kann. Bevorzugt sind die Kammern durch Nuten oder Rillen bzw. längliche Ausnehmungen in einem Plattenelement realisiert.

Die Herstellung eines modularen Plattenelements erfolgt beispielsweise durch Ausfräsen der mindestens einen Kammer aus einer Massivplatte oder durch Verpressen in einer Pressform, die die entsprechende Kammergeometrie aufweist.

Auch kann das modulare Plattenelement genutzt werden, um Dämm- und Isolationsputze zu ersetzen. Es dient auch als Wandersatz und erfüllt dabei die beiden Aufgaben Wärmen und Kühlen gleichermaßen.

Erfindungsgemäß umfasst das erste Trägerelement ein fluidförderndes Innenelement und ein als Platte ausgebildetes tragendes Außenelement.

Ferner ist es von Vorteil, wenn an dem ersten Trägerelement, insbesondere an dessen Außenelement, vorzugsweise an der dem Innenelement abgewandten Seite des Außenelements, ein Verstärkungselement zur Versteifung angeordnet ist. Vorzugsweise ist das Verstärkungselement zur Versteifung als Bienenwabenstruktur ausgebildet. Im Bereich der Anwendung als Durchleitung für ein Fluid wird vorzugsweise ein sechseckiges Bienenwabenmuster bzw. eine Bienenwabenstruktur verwendet, um die mechanische Druckfestigkeit in alle drei Raumrichtungen zu maximieren und gleichzeitig die Wandstärke zwischen aneinandergrenzenden Kammern so gering wie möglich zu halten.

Ferner ist es günstig, wenn das erste Trägerelement eine Struktur zum Fluidaustausch aufweist und/oder die mindestens eine Kammer nicht geschlossen bzw. offen bzw. offenporig ausgebildet ist, sodass z. B. gekühltes Fluid, wie Luft, durchströmen kann. Bevorzugt sind die Kammern als Nuten, Rillen und/oder länglichen Ausnehmungen ausgebildet. Diese können parallel zueinander auf einer Seite der Platten und parallel zueinander auf der anderen Seite angeordnet sein. Die parallel zueinander ausgerichteten Strukturen auf der Vorderseite können bevorzugt senkrecht zu den parallel ausgerichteten Strukturen auf der Hinterseite der Platte bzw. des plattenförmigen Teilelements im modularen Plattenelement angeordnet sein. Damit sind die in dem plattenförmigen Teilelement vorgesehenen Strukturen bzw. Kammern unabhängig voneinander, da sie keinen gemeinsamen Raum aufweisen, in dem das Fluid, insbesondere das Fluid Luft, fließen kann. Damit sind die Ausbreitungsrichtungen der Wärme in dem modularen Plattenelement durch die Konstruktion vorgebbar. Auf diese Weise können die Kammern zur Klimatisierung und Kühlung eines Raumes eingesetzt werden. Die Klimatisierungsfunktion kann unabhängig von der Heizung eingesetzt werden. Außerdem dienen diese Strukturen dazu, die Wärme im Plattenelement zu verteilen und damit beispielsweise auch eine Wärmeverteilung in horizontaler Richtung zu realisieren, so dass die Wärme nicht immer nur oberhalb des Heizanstrichs entsteht.

Zudem kann Abwärme von Transformatoren, die beispielsweise den Heizanstrich mit elektrischer Energie versorgen, in die mindestens eine Kammer geleitet werden. Eine weitere Funktion des modularen Plattenelements ist die Schalldämmung, die durch die mindestens eine Kammer erzeugt wird. Schall wird so z. B. von außen zu der mindestens einen Kammer bzw. dem Trägerelement geleitet, als Phonon weitergeführt und dann innerhalb der mindestens einen Kammer gebrochen. Die Schallwelle richtet sich vorzugsweise entlang der mindestens einen Kammer aus und wird dabei in ihrer Intensität geschwächt. Die Energie der Welle ist in thermische Energie umsetzbar. Zwar ist diese Energiemenge zu klein um Heizeffekte zu haben, jedoch handelt es sich nach der Absorption ausschließlich um Wärme.

Günstigerweise ist an dem Verstärkungselement ein zweites Trägerelement angeordnet. Mithilfe des zweiten Trägerelements kann das modulare Plattenelement mechanisch verstärkt werden.

Dabei ist es von Vorteil, wenn das zweite Trägerelement als Platte ausgebildet ist.

Auch ist es günstig, wenn die mindestens eine Kammer einer beliebigen Kurve im Raum innerhalb des Plattenelements, insbesondere innerhalb des Innenelements, folgt. Somit ist eine beliebige Form der mindestens einen Kammer realisierbar. Ferner ist es von Vorteil, wenn mindestens zwei Kammern parallel zueinander ausgerichtet sind, um ein Fluid in eine Richtung zu fördern.

Auch ist es vorteilhaft, wenn mindestens zwei Kammern in unterschiedliche Richtungen, insbesondere senkrecht zueinander, ausgerichtet sind, um ein Fluid in zwei unterschiedliche Richtungen zu fördern.

Auch kann vorgesehen sein, dass die mindestens zwei Kammern in unterschiedlichen Winkeln zueinander orientiert sind, vorzugsweise zwischen 45 Grad und 90 Grad zueinander orientiert sind.

Mithilfe der mindestens einen Kammer ist es auch z. B. möglich elektrische Verkabelungen und/oder eine einfache Verlegung von IT-Netzwerken, Beleuchtungsstrom, Signal- und Videokabelverlegung zu realisieren.

Bevorzugterweise weist die mindestens eine Kammer des Trägerelements im Querschnitt eine Kuppelform auf und/oder ist halbkreisförmig ausgebildet. Vorzugsweise weisen im Querschnitt die beiden gegenüberliegenden Enden der offenen Seite der mindestens einen Kammer einen Abstand mit wenigstens einem Millimeter und höchstens zwei Zentimeter auf.

Auch ist es von bevorzugt, dass die mindestens eine Kammer des Trägerelements von einem Seitenrand des Plattenelements zu einem anderen Seitenrand des Plattenelements erstreckt.

Vorteilhafterweise erstreckt sich die mindestens eine Kammer des Trägerelements über die gesamte Breite und/oder Höhe und/oder Länge des Plattenelements.

Des Weiteren kann vorgesehen sein, dass an dem ersten Trägerelement, insbesondere an dessen Außenelement, ein Stützelement angeordnet ist. Mithilfe des Stützelements kann das Plattenelement weiter verstärkt werden, um zum Beispiel als Wandersatz zu dienen.

Erfindungsgemäß ist an dem ersten Trägerelement (2) ein als Platte ausgebildetes Stützelement (10) angeordnet und das Stützelement (10) an der dem Außenelement (6) abgewandten Seite des Innenelements (5) angeordnet.

Mit anderen Worten ausgedrückt ist es von Vorteil, wenn das Stützelement auf der einen Seite des Innenelements und das Außenelement auf der anderen Seite des Innenelements angeordnet ist.

Vorteilhafterweise umfasst das Plattenelement, insbesondere das Stützelement, einen Tiefengrund bzw. eine Grundierung bzw. eine Tiefengrundierung, ein Klebeband zum Aufbringen und Isolieren von Kupfer oder von einem Kupferstreifen, ein Gewebe und/oder den Heizanstrich.

Vorzugsweise sind zwei Klebebänder, auf denen bevorzugterweise Kupfer bzw. ein Kupferstreifen anordenbar ist, an zwei gegenüberliegenden Kanten des Plattenelements angeordnet.

Auch ist es günstig, wenn der Heizanstrich auf dem Gewebe angeordnet ist.

Ferner ist es von Vorteil, wenn das Gewebe auf dem Kupfer oder dem Kupferstreifen angeordnet ist.

Bevorzugterweise ist das Kupfer oder der Kupferstreifen auf dem Klebeband angeordnet, wobei vorzugsweise das Klebeband auf dem Tiefengrund anordenbar ist.

Günstigerweise sind das Gewebe, der Heizanstrich, und/oder der Tiefengrund flächig, vorzugsweise vollflächig, auf dem Plattenelement, insbesondere auf dem Stützelement angeordnet, sodass vorzugsweise das Gewebe, der Heizanstrich, und/oder der Tiefengrund den größten Teil einer Oberfläche oder die gesamte Oberfläche einer Seite des Plattenelements oder des Stützelements einnimmt.

Hingegen ist es von Vorteil, wenn das Klebeband und/oder das Kupfer und/oder Kupferstreifen partiell bzw. stellenweise auf dem Stützelement angeordnet ist, sodass vorzugsweise das Klebeband und/oder das Kupfer und/oder Kupferstreifen nicht die gesamte Oberfläche einer Seite des Plattenelements oder des Stützelements einnimmt.

Hierbei ist es günstig, wenn zwei Kupferstreifen an zwei gegenüberliegenden Kanten des Plattenelements angeordnet sind, sodass bei Berührung der beiden Kupferstreifen durch ein Element, insbesondere einen Heizanstrich mit einem elektrisch leitfähigen Stoffgemisch, Infrarotstrahlung erzeugbar ist.

Günstigerweise ist das Stützelement als Platte ausgebildet.

Des Weiteren ist bevorzugt, dass das Stützelement den Heizanstrich zum Beheizen des Raumes und zum indirekten Beheizen von Fluid innerhalb des Innenelements umfasst.

Auch ist es von Vorteil, wenn das Stützelement einen Träger umfasst, auf dem ein leitfähiges Material in Bahnen, vorzugsweise Kupferstreifen, aufgebracht bzw. aufgeklebt ist.

Bevorzugterweise umfasst das Stützelement den Heizanstrich, wobei vorzugsweise der Heizanstrich auf dem leitfähigen Material angeordnet ist, insbesondere flächig auf dem Stützelement aufgetragen ist.

Auch ist bevorzugt, dass das Stützelement eine Grundierung umfasst, die insbesondere auf dem Heizanstrich angeordnet ist.

Vorzugsweise umfasst das Stützelement ein Gewebe, das insbesondere auf der Grundierung angeordnet ist.

Ferner ist es von Vorteil, wenn das Stützelement ein Putzmaterial, insbesondere einen Wandputz, umfasst, das insbesondere auf dem Gewebe angeordnet ist.

Des Weiteren ist es von Vorteil, wenn auf der Heizschicht eine brandhemmende Schicht angeordnet ist. Eine weitere Eigenschaft des Plattenelements ist vorzugsweise seine Beschichtung mit einer feuerhemmenden Substanz, die die Verbreitung von Feuer maßgeblich hemmt.

Günstigerweise umfasst das Plattenelement ein Reflexionselement zur Reflektion von Infrarotstrahlung, wobei vorzugsweise das Reflexionselement zwischen dem Innenelement und dem Außenelement angeordnet ist, um Strahlung zu reflektieren. Bevorzugt ist das Reflexionselement durch eine Schicht gebildet, die Glasgranulat, bevorzugt Glasmikrohohlkügelchen umfasst. Dies sind Glaskügelchen mit einem Lufteinschluss und einer Abmessung von bevorzugt 10 bis 1.200 µm, besonders bevorzugt von 40 - 600 µm, ganz besonders bevorzugt von 60 - 120 µm, insbesondere bevorzugt von 60 - 80 µm.

Des Weiteren kann vorgesehen sein, dass das Plattenelement mindestens eine elektrische Leitung umfasst, wobei vorzugsweise die mindestens eine elektrische Leitung aus leitfähigem Material ausgebildet ist.

Bevorzugterweise ist die mindestens eine elektrische Leitung innerhalb der mindestens einen Kammer angeordnet.

Ferner ist es von Vorteil, wenn die mindestens eine elektrische Leitung als Kupferstreifen ausgebildet ist, der vorzugsweise flach innerhalb des Plattenelements verlegt ist.

Ferner ist es günstig, wenn das Plattenelement mindestens ein Fluidverbindungselement zur Verbindung zweier Kammern zweier Plattenelemente und zum Transport von Wärme mithilfe eines Fluides umfasst. Mithilfe des Fluidverbindungselements können alle Funktionen des Plattenelements um z. B. eine Kante herum weiter zu führen, ohne dass eine Funktionseinschränkung zu erwarten ist.

Vorzugsweise umfasst das Plattenelement mindestens ein Elektrosteckelement, das der elektrischen Verbindung zweier Plattenelemente dient.

Auch ist es vorteilhaft, wenn das Plattenelement eine Kontaktierungseinrichtung umfasst, wobei vorzugsweise die Kontaktierungseinrichtung wenigstens zwei elektrisch leitfähige Streifen mehrerer Plattenelemente durch ein Stecksystem elektrisch leitend miteinander verbindet.

Günstigerweise umfasst die Kontaktierungseinrichtung ein Feder- und Nut-System oder steckbare Verbinder. Vorzugsweise ist die Kontaktierungseinrichtung in einem Plattenelement konisch ausgebildet, um mit einem hohen Anpressdruck eine Verbindung erzeugen zu können, wodurch die Übertragung eines Stroms ermöglicht wird. Mithilfe des Elektrosteckelements können alle Funktionen des Plattenelements um z. B. eine Kante herum weiter zu führen, ohne dass eine Funktionseinschränkung zu erwarten ist.

Ein weiterer Aspekt der vorliegenden Erfindung umfasst ein System zum zumindest teilweise modularen Erstellen einer Wand, einer Decke und/oder eines Bodens eines Raumes.

Dieses System umfasst vorzugsweise ein modulares Plattenelement mit einem ersten Trägerelement nach dem oben ausgeführten Aspekt, wobei vorzugsweise das erste Trägerelement ein Innenelement, insbesondere ein fluidförderndes Innenelement, und ein tragendes Außenelement umfasst.

Es wird ausdrücklich darauf hingewiesen, dass die Merkmale des modularen Plattenelements, wie sie unter dem ersten Aspekt erwähnt werden, einzeln oder miteinander kombinierbar bei dem System Anwendung finden können.

Anders ausgedrückt, die unter dem obigen Aspekt der Erfindung genannten Merkmale betreffend das modulare Plattenelement können auch hier unter dem weiteren Aspekt der Erfindung mit weiteren Merkmalen kombiniert werden.

Des Weiteren ist es bevorzugt, dass das System ein weiteres modulares Plattenelement umfasst. Dieses weist günstigerweise auf:
- ein weiteres erstes Trägerelement mit mindestens einer Kammer zur mechanischen Stabilisierung und zum Transport von Wärme mithilfe eines Fluides,
- wobei das weitere erste Trägerelement ebenfalls ein Innenelement, insbesondere ein fluidförderndes Innenelement, und ein tragendes Außenelement umfasst.

Bevorzugterweise sind die fluidfördernden Innenelemente der beiden Trägerelemente aufeinanderliegend, insbesondere unmittelbar aufeinanderliegend, angeordnet. Somit können modulare Plattenelemente miteinander kombiniert werden. Sie können z. B. in der Kombination an oder in oder als Wand auch in kombinierter Montage unterschiedliche Funktionen ausüben.

Auch kann vorgesehen sein, dass die Kammern der ersten Trägerelemente der beiden modularen Plattenelemente bei Verklebung oder Verbindung in unterschiedlichen Winkeln zueinander orientiert sind, vorzugsweise zwischen 45 Grad und 90 Grad zueinander orientiert sind.

Ferner ist es bevorzugt, dass am Schnittpunkt zweier Kammern der Plattenelemente Durchlasspunkte gebildet werden, die Fluid, bevorzugt Luft, von der einen Kamer in die andere Kammer strömen lassen.

Günstigerweise weist das System zur Montage ein Verbindungssystem auf, welches vorzugsweise aus Clips, Schienen und Bügeln aufgebaut ist, und welches die Plattenelemente hinsichtlich Fluid und Elektrizität verbindbar ausbildet.

Die leichte Demontage bei Schienen und Bügeln erlaubt auch einen einfachen Austausch oder eine Reparatur eines modularen Plattenelements, falls eine mechanische Außeneinwirkung das Plattenelement beschädigt hat.

Des Weiteren ist ergänzend oder alternativ bevorzugt, dass das System Schienen zur Befestigung an einer Wand und/oder einer Decke und/oder eines Bodens eines Raumes umfasst, um an den Schienen ein modulares Plattenelement zu befestigen.

Auch ist es ergänzend oder alternativ von Vorteil, wenn das System eine Klebeschicht zur Befestigung an einer Wand, einer Decke und/oder eines Bodens eines Raumes umfasst, um an der Klebeschicht ein modulares Plattenelement zu befestigen.

Ferner ist es möglich, dass mindestens zwei Plattenelemente flächig nebeneinander anordenbar sind, vorzugsweise nahtlos aneinander anschließen. Somit können modulare Plattenelemente miteinander kombiniert werden. Sie können z. B. in der Kombination an oder in oder als Wand auch in kombinierter Montage unterschiedliche Funktionen ausüben.

Vorzugsweise sind mindestens zwei Plattenelemente aufeinander anordenbar, vorzugsweise schließen diese nahtlos aneinander an.

Abschließend seien noch die Materialien der vorgenannten Bestandteile des modularen Plattenelements genannt.

So ist es günstig, wenn das erste Trägerelement, insbesondere dessen Außenelement, nachstehende Werkstoffe einzeln oder in Kombination umfasst:
- Hanf Verbundstoff
- Glasfaser
- Flachs
- Carbon
- Kunststoffgewebe
- Hanf
- Weichfaserplatte
- Hanfplatte
- Cocosplatte
- Glasgewebe (z. B. als Vlies)

Vorzugsweise sind die oben genannten Werkstoffe des ersten Trägerelements einzeln oder in Kombination als Schicht innerhalb des Plattenelements ausgebildet.

Ferner ist es von Vorteil, wenn das zweite Trägerelement nachstehende Werkstoffe einzeln oder in Kombination umfasst:
- Hanf Verbundstoff
- Glasfaser
- Flachs
- Carbon
- Kunststoffgewebe
- Hanf
- Glasgewebe (z. B. als Vlies)
- Weichfaserplatten
- Hanfplatte
- Cocos, insbesondere Cocosplatte

Vorzugsweise sind die oben genannten Werkstoffe des zweiten Trägerelements einzeln oder in Kombination als Schicht innerhalb des Plattenelements ausgebildet.

Des Weiteren ist es von Vorteil, wenn das erste Trägerelement, insbesondere dessen Innenelement, nachstehende Werkstoffe einzeln oder in Kombination umfasst:
- Hanf mit zementärem Verbundstoff
- Putz zum Verputzen von Wänden, Decken und/oder Böden
- Aluverbundwerkstoff
- Glasschaum
- Flachs
- Hanffasergewebe
- Glasgewebe (z. B. als Vlies)

Vorzugsweise sind die oben genannten Werkstoffe des ersten Trägerelements einzeln oder in Kombination als Schicht innerhalb des Plattenelements ausgebildet.

Auch ist es günstig, wenn das Verstärkungselement nachstehende Werkstoffe einzeln oder in Kombination umfasst:
- Aerogel(e)
- Kunststoff(e), insbesondere ausgestaltet als Bienenwaben
- Glasschaum
- Kork

Vorzugsweise sind die oben genannten Werkstoffe des Verstärkungselements einzeln oder in Kombination als Schicht innerhalb des Plattenelements ausgebildet.

Bevorzugterweise umfasst der Träger nachstehende Werkstoffe einzeln oder in Kombination:
- Hanfverbundstoff
- Glasfaser
- Flachs
- Carbon
- Kunststoffgewebe
- Hanf

Vorzugsweise sind die oben genannten Werkstoffe des Trägers einzeln oder in Kombination als Schicht innerhalb des Plattenelements ausgebildet.

Vorteilhafterweise umfasst das Reflexionselement nachstehende Werkstoffe einzeln oder in Kombination:
- Aluminiumfolie
- Aluminiumfolie gelocht oder geschlitzt
- Glasgranulat
- Reflektionsfarbe

Vorzugsweise sind die oben genannten Werkstoffe des Reflexionselements einzeln oder in Kombination als Schicht innerhalb des Plattenelements ausgebildet.

Auch ist es von Vorteil, wenn das Plattenelement zwei Reflexionselemente umfasst.

Vorzugsweise ist jeweils ein Reflexionselement an den Seiten des Außenelements des ersten Trägerelements angeordnet.

Nachfolgend wird der oben dargestellte Erfindungsgedanke ergänzend mit anderen Worten ausgedrückt.

Dieser Gedanke betrifft vorzugsweise - vereinfacht dargestellt - ein modulares Plattenelement zum zumindest teilweise Erstellen einer Wand, einer Decke und/oder eines Bodens eines Raumes mit einem Trägerelement (vorzugsweise einem ersten Trägerelement) mit mindestens einer Kammer zur mechanischen Stabilisierung und zum Transport von Wärme mithilfe eines Fluides zu versehen. Um Wärme zu erzeugen ist vorzugsweise ein Heizanstrich zum Beheizen des Raumes mit Niedertemperatur-Infrarot-Technik vorgesehen, wobei der Heizanstrich ein elektrisch leitfähiges Stoffgemisch umfasst.

Nochmals von einer anderen Seite betrachtet, gab es in der Vergangenheit Heizmatten und Heizanstriche, um die oben genannte Aufgabe Problem zu lösen. Dabei bestand in der Lebensdauer zwischen den beiden Heizvarianten ein eklatanter Unterschied, da der Verbau von Ruß als Leitermaterial in Matten, die Lebensdauer dramatisch verringert. Die Leistungsdaten, die rechnerisch einem nadelbasierten Heizanstrich zu Grunde liegen, lassen eine rechnerische Haltbarkeit von mehreren tausend Jahren vermuten.

Aus diesem Grund wird vorteilhafterweise zur Heiztechnik in einem erfindungsgemäßen modularen Plattenelement ein Heizanstrich dieser nadelbasierten Bauart verwendet.

Wärme wird generell nur dann transportiert, wenn an zwei Punkten im Raum unterschiedliche Temperaturen vorliegen. Sie fließt von der wärmeren Stelle zur kälteren Stelle entsprechend des Temperaturgradienten.

Alte Heizsysteme, wie Konvektionsheizungen oder Infrarotheizpaneele benötigen zur Wärmeübertragung dabei extrem hohe Delta-T, also Abweichungen zwischen zwei Temperaturbereichen, die Energie austauschen sollen, mit dem Ziel die kälteren Flächen zu beheizen.

Diese Unterschiede sind bauartbedingt bei den Systemen nötig, da ihnen allen gemein ist, dass mit kleinen Flächen an Heizung große Flächen in Raumen beheizt werden sollten.

Diese Vorgehensweise hat die technische Folge, dass die Verteilung der Wärme niemals homogen werden kann. An Stellen mit hohen Temperaturdifferenzen fließen deshalb zu hohe Wärmemengen ab.

Diese Energie ist zum Heizen eines Hauses verloren und entweicht in die Umgebung und Atmosphäre.

Zudem ist allen moderneren bereits großflächig agierenden Heizsystemen, die auf Wänden verbaut werden gemein, dass sie nicht die gesamte Wand bedecken können. Die Systeme arbeiten mit klaren und nicht veränderbaren Leistungsdichten zum Erhalt eines Wärmestroms, die von der Bauart der Heizung und deren Flächenwiderstand abhängig sind. Würden diese Systeme die gesamte Wand bedecken, wären erstens die Heizmedienkosten zu hoch und zweitens der Montageaufwand zu hoch und drittens die Zuleitungselektrik komplexer.

Hinzu kommt ein Effekt, der vor allem im modernen Neubau zum Tragen kommt. Je besser die Wärmedämmwerte von Häusern werden, desto weniger wird die Verteilung von Abstrahlwärme ideal verteilt werden können.

Dies liegt vor allem daran, dass auch Strahlung, wenngleich eine sehr leichte, aber eben auch eine Übertemperatur benötigt, damit ein Ungleichgewicht zwischen Primär- und Sekundärstrahlung entsteht.

Ohne das Ungleichgewicht, welches die Heizung erzeugen muss, findet kein Energietransport statt.

Dieses Ungleichgewicht wird bei Strahlungsheizungen ausgeglichen indem mehr und energiereichere Infrarotphotonen von der warmen Wand, in der die Heizung verbaut ist, emittiert werden, als von den kalten Wänden, die Sekundärstrahlung niedrigerer Energie abgeben. So funktioniert bei Strahlungsheizungen der Energietransport.

Solange bei einer Wandflächenheizung dieser Art die Wärme von der Heizfläche abgegeben wird, erwärmt sich die gesamte Heizfläche der Heizung um einen Bereich von einem bis zwei Grad und gibt während die Übertemperatur besteht, Energie als Infrarotstrahlung ab. Die Infrarot-Heizung benötigt nun diesen Temperaturunterschied um Wärme zu transportieren, gleichzeitig jedoch soll die Hysterese bei nur einem Zehntelgrad erhalten bleiben.

Um keinen falschen Eindruck zu erwecken, muss betont werden, dass flächenbasierte Carbonheizungen als Anstrich die am Markt zurzeit besten technischen Lösungen sind, da sie neben günstigen Kosten, schnellem Verbau und extremer Lebensdauer nur einen sehr niedrigen Verbrauch haben, der alle anderen Heizsysteme systembedingt schlägt. Der qualitative physikalische Vergleich zeigt dies sofort und sehr eindeutig.

Je weniger Energie nun eine solche Heizung benötigt, desto weniger Elektrizität wird eingeleitet, um die Abstrahloberflächentemperatur zu erhalten. Die Schaltzeiten werden so kurz, dass eine bestmögliche Verteilung nicht mehr gewährleistet ist.

Wäre es möglich, die Fläche zu erhöhen, dabei die reine Heizenergiezuführung nicht zu vergrößern und gleichzeitig eine gute Dämmung und Reflexion zu erreichen, die in der Wand gerichtet ist, wären die Voraussetzungen für thermodynamisch günstigstes Heizen erfüllt.

Bei einer erfindungsgemäßen Flächenheizung bzw. bei einem modularen Plattenelement entsteht deshalb nun die technische Herausforderung zur weiteren Verbesserung der Systeme, für solche Anwendungsfälle. Wenn das beschriebene technische Problem der Verteilung gelöst wäre, geht damit als Ergebnis eine Heizung hervor, die auch in allen anderen Anwendungsgebieten verbesserte Werte liefert und Energie einspart.

Die hier vorgestellte technische Lösung zielt darauf ab, die Heizenergie innerhalb einer Wand, Decke und/oder einem Boden so zu verteilen, dass sie die geometrischen Außengrenzen der Heizung zur Seite und nach oben und unten überwindet, um auch an Stellen ohne Heizung Wärme zu verteilen, die an der Wandoberfläche als Strahlung abgegeben werden soll.

Diese Lösung ist zudem interessant in Bereichen der Bodenverlegung bei der es zu Zonen hoher Wärmedichte und damit hoher Temperatur kommen kann, die zum Beispiel unter Teppichen nicht adäquat abgeleitet werden kann. Ein System, welches Übermengen an Wärme an Wärmestaupunkten zur Seite ableiten kann, verändert damit auch die Durchleitung durch die Wand, die durch ein niedriger werdendes Delta-T abnimmt. Die nicht verloren gegangene Wärme wird nun wieder der Heizung des Raumes zugeführt.

In Wänden darf gleichzeitig zum vertikalen und horizontalen Energietransport jedoch die Dämmeigenschaft in Richtung der Durchdringung der Wand nicht nur nicht verschlechtert werden, sondern sollte sich im günstigsten Fall auch verbessern.

Es ist also das Ziel durch Veränderungen der Bauart einer Heizung in einer großen Fläche einer Wand, den Wärmefluss so zu steuern, dass er der gewünschten Flussrichtig entlang der Wand oder des Bodens folgt, jedoch weder Wand noch Boden bevorzugt durchdringt.

Die Heizung bzw. das modulare Plattenelement muss in der Lage sein, im gleichen Medium in einer Raumausrichtung Wärme besonders gut zu leiten und in einer anderen Ausrichtung desselben Raumelementes den Wärmefluss besonders gut einzudämmen.

Vor diesem Hintergrund ist vorzugsweise vorgesehen, ein modulares Plattenelement bzw. eine Verbundmaterialplatte, bestehend aus einem mehrschichtigen Aufbau, der sich wiederholen kann, wenn das Plattenelement in höherer Schichtstärke erstellt wird, um zum Beispiel eine höhere Vertikallast oder Flächenlast zu tragen.

Die Platte wird vorzugsweise in einer Bauform entlang ihrer längeren Seite mittig und großflächig mit Heizanstrich beschichtet oder in einer anderen Bauform rechtwinklig zur Laufrichtung mit mehreren parallel geschalteten Heizbahnen beschichtet.

Auch weist das Plattenelement günstigerweise ein Reflexionselement auf, die gelocht ausgebildet sein kann oder ein geometrisches Durchschussmuster besitzen kann, um Diffusionsoffenheit zu garantieren. Das Durchschussmuster überlappt sich vorzugsweise nicht mit einem in dem Plattenelement eingebauten Bienenwabenstruktur oder der mindestens einen Kammer, um keinen massegebundenen Energietransport wie bei einem Wärmetauscher zu verursachen.

Vorzugsweise besitzt das Plattenelement nach der mindestens einen Kammer eine Reflexionsfolie bzw. ein Reflexionselement und in der Folge darauf eine vorzugsweise aus Hanf aufgebaute Stabilitätslage. Außerdem ist das Material günstigerweise diffusionsoffen.

Die nächste Schicht besteht vorzugsweise aus einer Doppellage von Kammern, die über den Heizanstrich hinausragen und die günstigerweise über ihre gesamte Länge offen verbindbar sind. So entstehen entlang der Längsrichtung des Plattenelements Kammern, die die gesamte Länge des Plattenelements bedecken. Dabei können in anderen Bauformen die Kammern auch in schrägen Winkeln über das Plattenelement laufen. In einer weiteren Bauform sind die Kammern mit weiteren Kammern auf anschließenden Plattenelement verbindbar.

Diese Kammern bzw. die mindestens eine Kammer liegt vorzugsweise in einer der beiden Schichten in einem beliebigen Winkel, zum Beispiel, vertikal in dem Plattenelement und in der kombinierten Schicht horizontal oder in einem anderen Winkel versetzt. Ein Plattenelement ist vorzugsweise in einer Form gefasst oder gepresst, sodass bei Überlagerung im Material Durchgänge zwischen den Kammern bzw. Kammersystemen der beiden Ausrichtungen entstehen.

In jeder am Ende geschlossenen Kammer, die zum Beispiel horizontal oder vertikal in der Wand liegen, befindet sich vorzugsweise Luft. Das Fluid ermöglicht eine langsame Wärmewanderung innerhalb des Plattenelements, aber vor allem über die technische Grenze des Auftrags des Heizanstrichs hinaus. Dabei kann an den geometrischen Übergängen der Ausfräsungen oder Pressformen Wärme ausgetauscht werden.

In einer weiteren Bauform werden vorzugsweise Schichten eines Plattenelements nicht verbunden und lassen jeweils unabhängig voneinander eine gerichtete Wärmewanderung zu.

Das verwendete Material sorgt dabei jedoch dafür, dass die Wärme in Richtung normal zur Wand, also durch die Wand hindurch nicht oder nur wenig per Konduktion transportiert werden kann.

Innerhalb des Plattenelements können gerichtete Teflonplättchen verbaut werden, die vorzugsweise im mikroskopischen Maßstab, eigenständig eine Ausrichtung parallel zur Erdoberfläche einnehmen, während sie in die Plattenelemente eingebracht werden. Damit leiten sie die Wärme zwar in die Breite, aber nicht in die Tiefe der Wand. Der Effekt entsteht, da die Zahl der Phasengrenzen in Richtung der aufeinanderliegenden Plättchen hoch und in Querrichtung klein ist.

Der Heizanstrich wird vorzugsweise direkt oder mit einer thermischen Übertragerschicht aufgetragen. Der Heizanstrich wird bevorzugterweise als elektrischer Widerstand von Strom durchflossen und erwärmt sich deshalb gleichmäßig auf der gesamten Fläche.

Die Elektroden zum vereinfachten Elektrizitätstransport werden vorzugsweise zur Erstellung eines Stecksystems wahlweise in den Kammern verpresst oder es werden Kammern geschaffen, die vom thermischen System unabhängig Kabel beherbergen.

Elektroden in der verpressten Version erlauben vorzugsweise durch einfache Steckverbindungen, den Übergang von Strom zwischen mehreren Plattenelementen. Dabei kann vor allem auch dem Problem vorgebeugt werden, dass zu hohe Ströme durch schlechte Verbindungen fließen.

Die Plattenelemente beinhalten günstigerweise als letzte Schicht eine Kombination aus Dämmung und Reflexion in Form zweier Materialschichten, die einzeln oder in Kombination aufgebracht werden können.

Die Dämmschicht dient dem Zweck gleichzeitig den Wärme- und den Schalldurchgang zu minimieren.

Die Isolations- und Reflexionsschicht dient dem Zweck, in der Wand erzeugte Infrarot-Strahlung direkt zurück zu reflektieren. Reflektierte Photonen dieser Schicht werden absorbiert und auf der Heizseite als Phonon durch das Material in die mindestens eine Kammer geleitet.

Zum Aufbau eines Plattenelements werden vorzugsweise Klebermaterialien mit niedrigen Wärmedurchlasskoeffizienten verwendet, um die Konduktion in Normalrichtung der Wand einzudämmen. Fliesenkleber mit hohen Wärmedurchlasskoeffizienten sorgen für gute Abgabe der Wärme in den Innenraum, um die Abstrahlflächen optimal mit Wärme zu versorgen.

Die Plattenelemente, welche die mindestens eine Kammer bzw. die Kammern beherbergen, sind vorzugsweise aus unterschiedlichen Materialien gefertigt. Dabei kommen zum Verpressen Holz-Carbon-Mischmaterialien zum Einsatz, Glasfaser, Leinen, Hanf, Naturfasern, Zementfasermischungen, PE, PP, Acryl mit angepassten Dehnungskoeffizienten in Abhängigkeit des Temperaturverlaufs zum Einsatz, um thermische Spannungen innerhalb des Materials und des Plattenelements gering zu halten.

In der Montage mehrerer Plattenelemente auf bzw. an z. B. einer Wand werden vorzugsweise die folgenden drei Verbindungsoptionen eingesetzt. Clips für ständige Verbindung, Schienen und Nutsteine und/oder Bügelsysteme für mehrfache Montage und Demontage sowie Klebetechnik zur dauerhaften Einbringung in eine Wand / Decke / Boden.

Die physikalische Stabilität eines Plattenelements wird vorzugsweise durch eine Bienenwabenstruktur oder eine andere geometrische Kammerstruktur mit hoher Druck- und Biegesteifigkeit und/oder durch die mindestens eine Kammer extrem erhöht. Sie kann auf diese Weise nicht nur in z. B. die Wand eingebaut werden oder die Wand beschichten, sondern sie kann die Wand im Verbundsystem ersetzen. Somit wird es möglich, ein ganzes Haus aus Heizwänden, Decken und Böden zu bauen.

Dabei ist in einer anderen Bauform vorzugsweise vorgesehen, dass das Plattenelement nicht beheizt ist, sondern neben den beheizbaren Elementen die Option schafft nur als Dämm- und Baumaterial verwendet zu werden.

Das modulare Plattenelement und z. B. seine auf der Wand oder z. B. in der Wand sorgen dafür, dass innerhalb der Platte keine thermischen Dehnungen entstehen, die Rissbildungen verursachen könnten, wie es bei der Aufbringung von Heizsystemen direkt auf eine Wand nicht ermöglicht. Die Systeme zur Rissüberbrückung sind im Stand der Technik Armierungen mit Gewebe oder das Verbauen der Heizungen auf Rigips oder Holzplatten, mit dem Nachteil, auf diesen Untergründen keine perfekte thermische Verteilung zu haben.

Eine weitere Option der Anwendung ist eine in der Industrie einsetzbare Platte, die die Eigenschaften umkehrt und eine Wärmeleitung durch eine Wand verbessert und gleichzeitig die Wärmeverteilung entlang der Platte verschlechtert, um auf Distanz Wärme gerichtet durch massive Materialien zu leiten und gleichzeitig die Umgebung so wenig wie möglich aufzuheizen. In dieser Bauform werden die Kammern bzw. die mindestens einen Kammer normal zur Heizung eingebracht und verbinden die einzelnen Schichten der Platte in deren Normalrichtung.

Ein modulares Plattenelement besteht vorzugsweise aus den genannten Materialien.

Auch ist es von Vorteil, wenn Kleber und/oder Thermospachtel / Thermospachtelmasse und/oder Spachtelmasse auf z. B. dem zweiten Trägerelement, dem Verstärkungselement, dem Außenelement, dem Reflexionselement, dem Innenelement und/oder dem Stützelement angeordnet ist.

Bevorzugterweise dient der Kleber und/oder der Thermospachtel / Thermospachtelmasse und/oder die Spachtelmasse dazu, die vorgenannten Elemente des erfindungsgemäßen Plattenelements miteinander zu verbinden.

Voreilhafterweise dient die Spachtelmasse als Abschlusselement nach außen bzw. als äußerste Schicht, die von einem Nutzer berührbar ist.

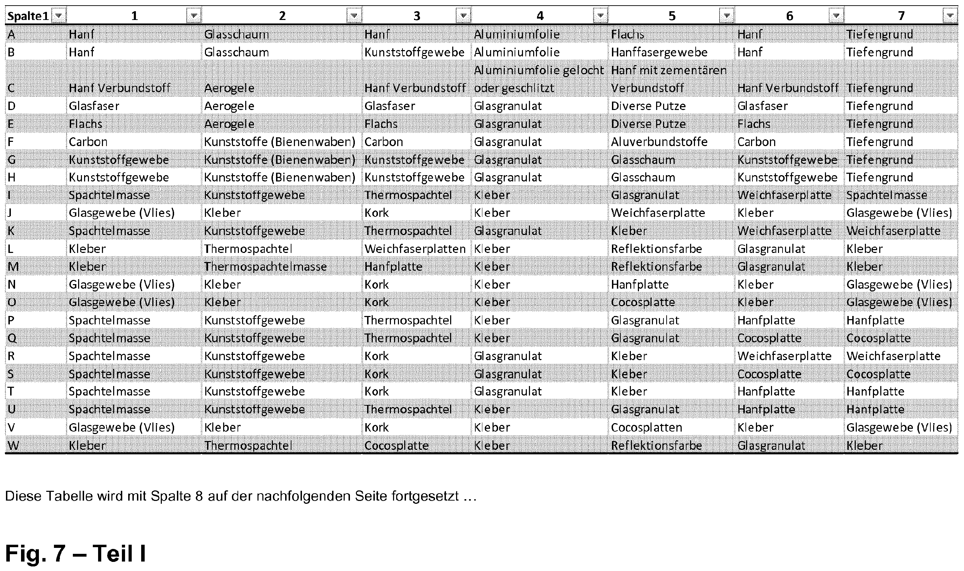

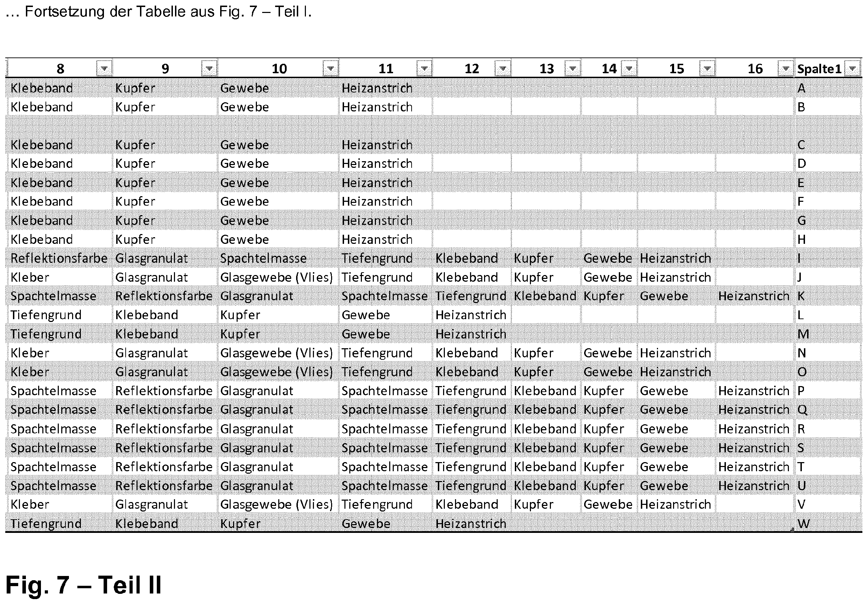

Beispielhaft konkret aufgeführte Ausgestaltungen eines Plattenelementes sind Figur 7 zu entnehmen.

Nachstehend wird die Erfindung anhand von Ausführungsbeispielen in Verbindung mit zugehörigen Zeichnungen näher erläutert. Hierbei zeigen schematisch:
- **Fig. 1**: eine 3-dimensionale Ansicht eines Aufbaus eines erfindungsgemäßen modularen Plattenelements;
- **Fig. 2**: eine weitere 3-dimensionale Ansicht des Aufbaus des modularen Plattenelements aus Figur 1;
- **Fig. 3**: eine weitere 3-dimensionale Ansicht des Aufbaus des modularen Plattenelements aus Figur 1;
- **Fig. 4**: einen Aufbau eines erfindungsgemäßen modularen Plattenelements an einer Wand;
- **Fig. 5**: einen weiteren Aufbau eines erfindungsgemäßen modularen Plattenelements an einer Wand;
- **Fig. 6**: einen alternativen Aufbau eines erfindungsgemäßen modularen Plattenelements an einer Wand, und
- **Fig. 7**: beispielhaft dargestellte Aufbauvarianten eines erfindungsgemäßen modularen Plattenelements.

In der nachfolgenden Beschreibung werden gleiche Bezugszeichen für gleiche Gegenstände verwendet.

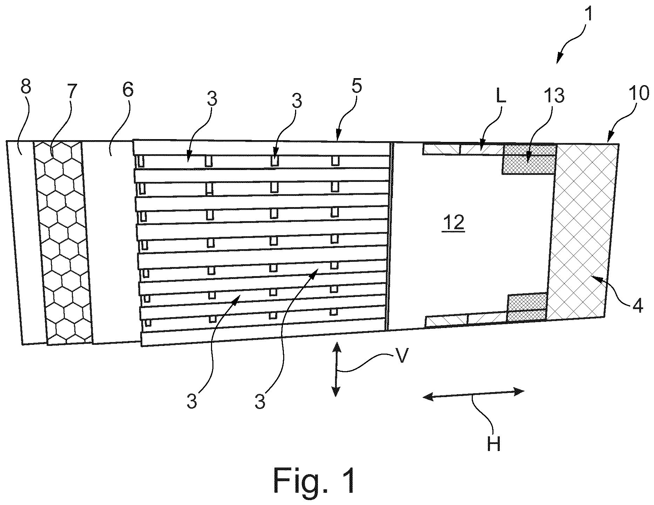

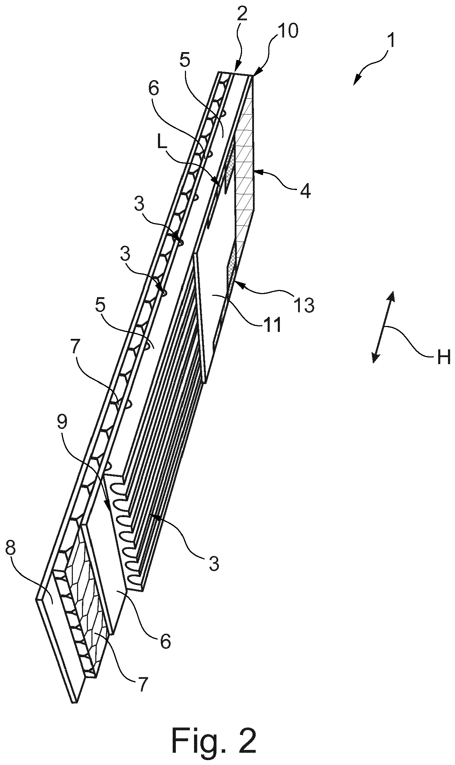

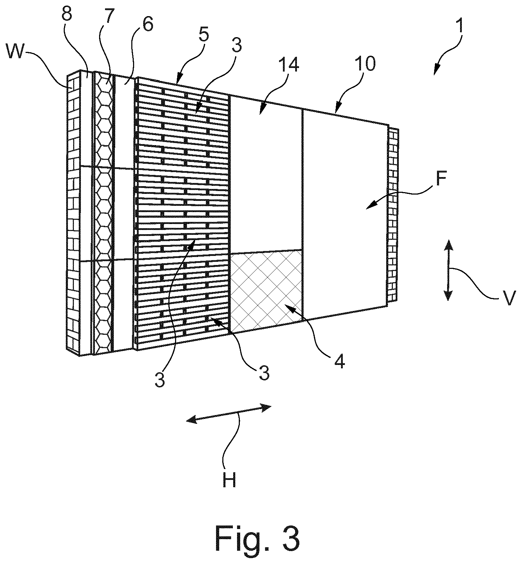

Figur 1 zeigt eine 3-dimensionale Ansicht eines Aufbaus eines erfindungsgemäßen modularen Plattenelements 1, wobei die Figuren 2 und 3 dasselbe modulare Plattenelement 1 zeigen, jedoch aus leicht anderen Perspektiven.

Im Nachfolgenden werden Figuren 1 bis 3 gemeinsam beschrieben.

Genauer dargestellt zeigen Figuren 1 bis 3 ein modulares Plattenelement 1 zum zumindest teilweise Erstellen einer Wand, einer Decke und/oder eines Bodens eines Raumes.

Das Plattenelement 1 hat dabei ein erstes Trägerelement 2 mit mehreren Kammern 3 zur mechanischen Stabilisierung und zum Transport von Wärme mithilfe eines Fluides sowie einen Heizanstrich 4 zum Beheizen des Raumes mit Niedertemperatur-Infrarot-Technik. Der Heizanstrich 4 umfasst ein elektrisch leitfähiges Stoffgemisch zur Erzeugung von Infrarotstrahlung.

Konkretisiert zeigen Figuren 1 bis 3, dass das erste Trägerelement 2 ein fluidförderndes Innenelement 5 und ein tragendes Außenelement 6 umfasst, wobei an dem Außenelement 6 des ersten Trägerelements 2 ein Verstärkungselement 7 zur Versteifung angeordnet ist.

Ferner umfasst das Plattenelement 1 ein Reflexionselement 9 zur Reflektion von Infrarotstrahlung, die von dem Heizanstrich 4 erzeugt wird, wobei das Reflexionselement 9 zwischen dem Innenelement 5 und dem Außenelement 6 angeordnet ist.

Das Verstärkungselement 7 befindet sich dabei an der dem Innenelement 5 abgewandten Seite des Außenelements 6, wobei das Verstärkungselement 7 als Bienenwabenstruktur ausgebildet ist.

Auch zeigen Figuren 1 bis 3, dass an dem Verstärkungselement 7 ein zweites Trägerelement 8 angeordnet ist, wobei das zweite Trägerelement 8 an der einen Seite des Verstärkungselements 7 angeordnet ist und das Außenelement 6 an der anderen gegenüberliegenden Seite.

Im hier beschriebenen Beispiel ist sowohl das tragende Außenelement 6 des ersten Trägerelements 2 als auch das zweite Trägerelement 8 als Platte ausgebildet.

Insbesondere in Figuren 1 und 3 zu erkennen, sind innerhalb des Innenelements 5 diverse Kammern 3 parallel in horizontaler Richtung H zueinander ausgerichtet.

Ferner sind ebenfalls diverse Kammern 3 in vertikaler Richtung V ausgerichtet sind.

Somit kann ein Fluid innerhalb der Kammern 3 sowohl vertikal als auch horizontal strömen. Hierbei weisen die vertikal ausgerichteten Kammern 3 und die horizontal ausgerichteten Kammern 3 keinen gemeinsamen Raum aus, so dass das Fluid der einzelnen Kammern nicht vermischt wird.

Jede Kammer 3 des Trägerelements 2 ist im Querschnitt halbkreisförmig ausgebildet, wobei im Querschnitt die beiden freien gegenüberliegenden Enden der offenen Seite jeder Kammer 3 einen Abstand mit beispielsweise 1,5 Zentimeter aufweist.

Die Kammern 3 des Trägerelements 2 erstrecken sich von einem Seitenrand des Plattenelements 1 zu einem anderen Seitenrand des Plattenelements 1.

Mit anderen Worten ausgedrückt, erstrecken sich die Kammern 3 des Trägerelements 2 über die gesamte Breite und Höhe des Plattenelements 1.

Des Weiteren zeigen Figuren 1 bis 3, dass an dem Innenelement 5 des ersten Trägerelements 2 ein Stützelement 10 angeordnet ist, das an der dem Außenelement 6 abgewandten Seite des Innenelements 5 angeordnet ist.

Mit anderen Worten ausgedrückt, ist auf der einen Seite des Innenelements 5 das Außenelement 6 angeordnet und auf der anderen Seite der Stützelement 10.

Das Stützelement 10 ist, ähnlich wie die Trägerelemente 6, 8, als Platte ausgebildet.

Hierbei umfasst das Stützelement 10 einen Träger 11, den Heizanstrich 4, eine Grundierung 12, ein Gewebe 13 und ein Putzmaterial 14.

Auf dem Träger 11 ist ein leitfähiges Material L in Bahnen, ausgebildet als Kupferstreifen, aufgeklebt, wobei der Heizanstrich 4 auf dem leitfähigen Material L und über das gesamte Stützelement 10 angeordnet ist.

Auf dem Heizanstrich 4 wiederum ist die Grundierung 12 angeordnet, auf der das Gewebe 13 aufgebracht ist.

Auf dem Gewebe 13 ist noch ein Putzmaterial 14 angeordnet.

Zusätzlich kann auf dem Heizanstrich 4 noch eine brandhemmende Schicht angeordnet sein.

In den Figuren nicht dargestellt, jedoch weist das modulare Plattenelement 1 elektrische Leitungen aus leitfähigem Material L auf, die innerhalb der Kammern 3 angeordnet sind.

Hierbei sind die elektrischen Leitungen als Kupferstreifen ausgebildet, die flach innerhalb des Plattenelements 1 verlegt sind.

Um mehrere Plattenelemente miteinander zu verbinden, weist das Plattenelement 1 ein oder mehrere Fluidverbindungselemente zur Verbindung zweier Kammern 3 zweier Plattenelemente 1 und zum Transport von Wärme mithilfe eines Fluides auf.

Auch hat das Plattenelement 1 in den Figuren 1 bis 3 diverse Elektrosteckelemente umfasst, die der elektrischen Verbindung zweier Plattenelemente 1 dienen.

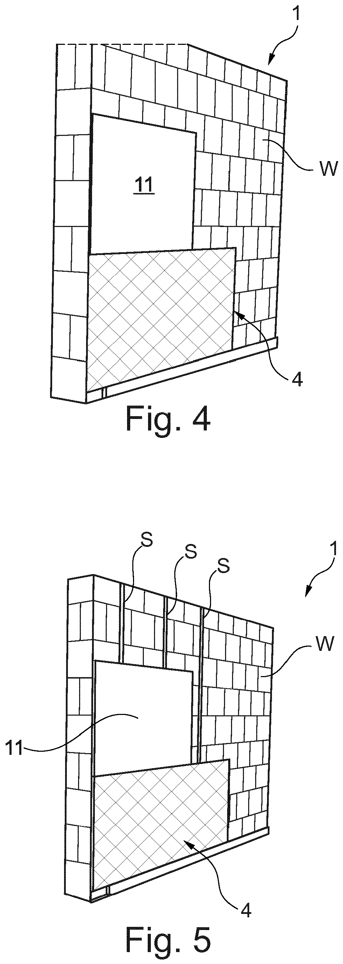

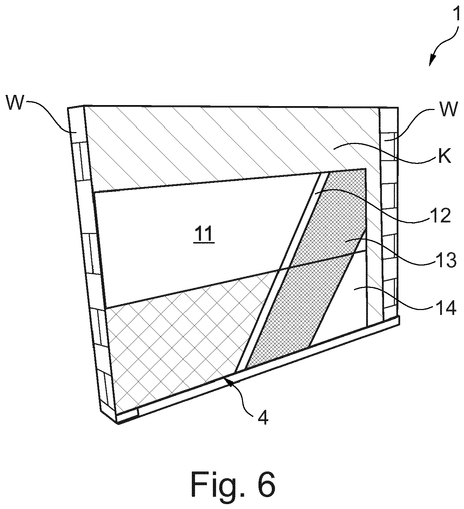

Figur 4 zeigt einen Aufbau eines erfindungsgemäßen modularen Plattenelements 1 an einer Wand W, wobei Figur 5 einen weiteren Aufbau und Figur 6 einen alternativen Aufbau eines erfindungsgemäßen modularen Plattenelements 1 an einer Wand W zeigt.

Hierbei wird in Figur 4 eine Klebeschicht K zur Befestigung an einer Wand, einer Decke und/oder eines Bodens eines Raumes verwendet, um an der Klebeschicht K ein modulares Plattenelement 1 zu befestigen.

In Figur 5 hingegen werden Schienen zur Befestigung an einer Wand, einer Decke und/oder eines Bodens eines Raumes verwendet, um an den Schienen S ein modulares Plattenelement 1 zu befestigen.

Abschließend sei noch darauf hingewiesen, dass das modulare Plattenelement 1 derart ausgestaltet ist, dass diverse Plattenelemente flächig nebeneinander und aufeinander anordenbar sind.

Betreffend die Figuren 1 bis 6 sei abschließend noch erwähnt, dass bevorzugt das zweite Trägerelement 8 Carbon, das Verstärkungselement 7 Kunststoffe, das Außenelement 6 Carbon, das Reflexionselement 9 Glasgranulat, das Innenelement 5 einen Aluverbundwerkstoff und der Träger 11 Carbon als Materialien aufweisen.

Figur 7 zeigt weitere beispielhaft dargestellte Aufbauvarianten eines erfindungsgemäßen modularen Plattenelements 1.

### Bezugszeichenliste

- 1: modulares Plattenelement
- 2: erstes Trägerelement
- 3: Kammer
- 4: Heizanstrich
- 5: Innenelement
- 6: Außenelement
- 7: Verstärkungselement
- 8: zweites Trägerelement
- 9: Reflexionselement
- 10: Stützelement
- 11: Träger
- 12: Grundierung
- 13: Gewebe
- 14: Putzmaterial

- H: horizontale Richtung
- V: vertikaler Richtung

- L: leitfähiges Material
- S: Schiene
- W: Wand

## Patentansprüche

1. Modulares Plattenelement (1) zum zumindest teilweise Erstellen einer Wand, einer Decke und/oder eines Bodens eines Raumes aufweisend:
- ein erstes Trägerelement (2) mit mindestens einer Kammer (3) zur mechanischen Stabilisierung und zum Transport von Wärme mithilfe eines Fluides, und
- einen Heizanstrich (4) zum Beheizen des Raumes mit Niedertemperatur-Infrarot-Technik, wobei der Heizanstrich (4) ein elektrisch leitfähiges Stoffgemisch umfasst,
- ein Reflexionselement (9) zur Reflektion von Infrarotstrahlung;
**dadurch gekennzeichnet, dass** das erste Trägerelement (2) ein fluidförderndes Innenelement (5) und ein als Platte ausgebildetes tragendes Außenelement (6) umfasst; und
wobei an dem ersten Trägerelement (2) ein als Platte ausgebildetes Stützelement (10) angeordnet ist;
und dadurch, dass das Stützelement (10) an der dem Außenelement (6) abgewandten Seite des Innenelements (5) angeordnet ist.

2. Modulares Plattenelement nach Anspruch 1,
- wobei an dem ersten Trägerelement (2), insbesondere an dessen Außenelement (6), vorzugsweise an der dem Innenelement (5) abgewandten Seite des Außenelements (6), ein Verstärkungselement (7) zur Versteifung angeordnet ist,
- wobei vorzugsweise das Verstärkungselement (7) zur Versteifung als Bienenwabenstruktur ausgebildet ist,
- wobei vorzugsweise an dem Verstärkungselement (7) ein zweites Trägerelement (8) angeordnet ist,
- wobei vorzugsweise das zweite Trägerelement (8) als Platte ausgebildet ist.

3. Modulares Plattenelement nach Anspruch 1 oder 2,
- wobei die mindestens eine Kammer (3) einer beliebigen Kurve im Raum innerhalb des Plattenelements (1), insbesondere innerhalb des Innenelements (5), folgt,
- wobei vorzugsweise mindestens zwei Kammern (3) parallel zueinander ausgerichtet sind, um ein Fluid in eine Richtung zu fördern,
- wobei vorzugsweise mindestens zwei Kammern (3) in unterschiedlicher Richtung, insbesondere senkrecht zueinander, ausgerichtet sind, um ein Fluid in zwei Richtungen zu fördern,
- wobei vorzugsweise die mindestens eine Kammer (3) des Trägerelements (2) im Querschnitt eine Kuppelform aufweist und/oder halbkreisförmig ausgebildet ist,
- wobei vorzugsweise im Querschnitt die beiden gegenüberliegenden Enden der offenen Seite der mindestens einen Kammer (3) einen Abstand mit wenigstens einem Millimeter und höchstens zwei Zentimeter aufweisen,
- wobei sich vorzugsweise die mindestens eine Kammer (3) des Trägerelements (2) von einem Seitenrand des Plattenelements (1) zu einem anderen Seitenrand des Plattenelements (1) erstreckt,
- wobei sich vorzugsweise die mindestens eine Kammer (3) des Trägerelements (2) über die gesamte Breite und/oder Höhe und/oder Länge des Plattenelements (1) erstreckt.

4. Modulares Plattenelement nach einem der vorangehenden Ansprüche,
- wobei das Stützelement (10) den Heizanstrich (4) zum Beheizen des Raumes und zum indirekten Beheizen von Fluid innerhalb des Innenelements (5) umfasst,
- wobei vorzugsweise das Stützelement (10) einen Träger (11) umfasst, auf dem ein leitfähiges Material in Bahnen, vorzugsweise Kupferstreifen, aufgebracht ist,
- wobei vorzugsweise das Stützelement (10) den Heizanstrich (4) umfasst, wobei vorzugsweise der Heizanstrich (10) auf dem leitfähigen Material angeordnet ist,
- wobei vorzugsweise das Stützelement (10) eine Grundierung (12) umfasst, die insbesondere auf dem Heizanstrich (4) angeordnet ist,
- wobei vorzugsweise das Stützelement (10) ein Gewebe (13) umfasst, die insbesondere auf der Grundierung (12) angeordnet ist,
- wobei vorzugsweise das Stützelement (10) ein Putzmaterial (14) umfasst, das insbesondere auf dem Gewebe (13) angeordnet ist,
- wobei vorzugsweise auf dem Heizanstrich (4) eine brandhemmende Schicht angeordnet ist.

5. Modulares Plattenelement nach einem der vorangehenden Ansprüche,
- wobei das Reflexionselement (9) zwischen einem Innenelement (5) und einem Außenelement (6) angeordnet ist, um Strahlung zu reflektieren.

6. Modulares Plattenelement nach einem der vorangehenden Ansprüche,
- wobei das Plattenelement (1) mindestens eine elektrische Leitung umfasst,
- wobei vorzugsweise die mindestens eine elektrische Leitung aus leitfähigem Material ausgebildet ist,
- wobei vorzugsweise die mindestens eine elektrische Leitung innerhalb der mindestens einen Kammer (3) angeordnet ist,
- wobei vorzugsweise die mindestens eine elektrische Leitung als Kupferstreifen ausgebildet ist, der flach innerhalb des Plattenelements (1) verlegt ist,
- wobei vorzugsweise das Plattenelement (1) mindestens ein Fluidverbindungselement zur Verbindung zweier Kammern (3) zweier Plattenelemente (1) und zum Transport von Wärme mithilfe eines Fluides umfasst,
- wobei vorzugsweise das Plattenelement (1) mindestens ein Elektrosteckelement umfasst, das der elektrischen Verbindung zweier Plattenelemente (1) dient.

7. System zum zumindest teilweise modularen Erstellen einer Wand, einer Decke und/oder eines Bodens eines Raumes aufweisend:
- ein modulares Plattenelement (1) mit einem ersten Trägerelement (2) nach einem der vorangehenden Ansprüche,
- wobei das erste Trägerelement (2) ein Innenelement (5), insbesondere ein fluidförderndes Innenelement (5), und ein tragendes Außenelement (6) umfasst,
- ein weiteres modulares Plattenelement umfassend:
- ein weiteres erstes Trägerelement (2) mit mindestens einer Kammer (3) zur mechanischen Stabilisierung und zum Transport von Wärme mithilfe eines Fluides,
- wobei das weitere erste Trägerelement (2) ebenfalls ein Innenelement (5), insbesondere ein fluidförderndes Innenelement (5), und ein tragendes Außenelement (6) umfasst, und
- wobei die fluidfördernden Innenelemente der beiden Trägerelemente (2) aufeinanderliegend, insbesondere unmittelbar aufeinanderliegend, angeordnet sind.

8. System nach Anspruch 7,
- wobei die Kammern (3) der ersten Trägerelemente (2) der beiden modularen Plattenelemente (1) bei Verklebung oder Verbindung in unterschiedlichen Winkein zueinander orientiert sind, vorzugsweise zwischen 45 Grad und 90 Grad zueinander orientiert sind,
- wobei vorzugsweise am Schnittpunkt zweier Kammern (3) der Plattenelemente (1) Durchlasspunkte gebildet werden, die Fluid von der einen Kamer in die andere Kammer strömen lassen.

9. System nach Anspruch 7 oder 8,
- wobei das System zur Montage ein Verbindungssystem aufweist, welches vorzugsweise aus Clips, Schienen und Bügeln aufgebaut ist, und welches die Plattenelemente hinsichtlich Fluid und Elektrizität verbindbar ausbildet, und/oder
- wobei vorzugsweise das System Schienen (S) zur Befestigung an einer Wand, einer Decke und/oder eines Bodens eines Raumes umfasst, um an den Schienen (S) ein modulares Plattenelement (1) zu befestigen, und/oder
- wobei vorzugsweise das System eine Klebeschicht (K) zur Befestigung an einer Wand, einer Decke und/oder eines Bodens eines Raumes umfasst, um an der Klebeschicht (K) ein modulares Plattenelement (1) zu befestigen.

10. System nach einem der Ansprüche 7 bis 9,
- wobei mindestens zwei Plattenelemente flächig nebeneinander anordenbar sind, vorzugsweise nahtlos aneinander anschließen,
- wobei vorzugsweise mindestens zwei Plattenelemente aufeinander anordenbar sind, vorzugsweise nahtlos aneinander anschließen.

## Claims

1. Modular plate element (1) for at least partly creating a wall, a ceiling and/or a floor of a room, having:
- a first support element (2) with at least one chamber (3) for mechanical stabilization and for transporting heat by means of a fluid, and
- a thermal coating (4) for heating the room by means of low-temperature infrared technology, wherein the thermal coating (4) comprises an electrically conductive mixture of substances,
- a reflective element (9) for reflecting infrared radiation;
**characterized in that** the first support element (2) comprises a fluid-conveying inner element (5) and a supporting outer element (6) formed as a plate; and
wherein a bearing element (10) formed as a plate is arranged on the first support element (2);
and **in that** the bearing element (10) is arranged on the side of the inner element (5) facing away from the outer element (6).

2. Modular plate element according to claim 1,
- wherein a reinforcing element (7) for strengthening is arranged on the first support element (2), in particular on its outer element (6), preferably on the side of the outer element (6) facing away from the inner element (5),
- wherein the reinforcing element (7) for strengthening is preferably formed as a honeycomb structure,
- wherein a second support element (8) is preferably arranged on the reinforcing element (7),
- wherein the second support element (8) is preferably formed as a plate.

3. Modular plate element according to claim 1 or 2,
- wherein the at least one chamber (3) follows any desired curve in the space inside the plate element (1), in particular inside the inner element (5),
- wherein at least two chambers (3) are preferably aligned parallel to each other, in order to convey a fluid in one direction,
- wherein at least two chambers (3) are preferably aligned in different directions, in particular perpendicular to each other, in order to convey a fluid in two directions,
- wherein the at least one chamber (3) of the support element (2) preferably has a dome shape in cross section and/or is formed semi-circular,
- wherein the two opposite ends of the open side of the at least one chamber (3) preferably have a spacing in cross section of at least one millimetre and at most two centimetres,
- wherein the at least one chamber (3) of the support element (2) preferably extends from one side edge of the plate element (1) to another side edge of the plate element (1),
- wherein the at least one chamber (3) of the support element (2) preferably extends over the entire width and/or height and/or length of the plate element (1).

4. Modular plate element according to one of the preceding claims,
- wherein the bearing element (10) comprises the thermal coating (4) for heating the room and for indirectly heating fluid inside the inner element (5),
- wherein the bearing element (10) preferably comprises a support (11), to which a conductive material is applied in tracks, preferably copper strips,
- wherein the bearing element (10) preferably comprises the thermal coating (4), wherein the thermal coating (10) is preferably arranged on the conductive material,
- wherein the bearing element (10) preferably comprises a primer (12), which is arranged in particular on the thermal coating (4),
- wherein the bearing element (10) preferably comprises a woven fabric (13), which is arranged in particular on the primer (12),
- wherein the bearing element (10) preferably comprises a cleaning material (14), which is arranged in particular on the woven fabric (13),
- wherein a flame retardant layer is preferably arranged on the thermal coating (4).

5. Modular plate element according to one of the preceding claims,
- wherein the reflective element (9) is arranged between an inner element (5) and an outer element (6), in order to reflect radiation.

6. Modular plate element according to one of the preceding claims,
- wherein the plate element (1) comprises at least one electrical line,
- wherein the at least one electrical line is preferably formed of conductive material,
- wherein the at least one electrical line is preferably arranged inside the at least one chamber (3),
- wherein the at least one electrical line is preferably formed as a copper strip, which is laid flat inside the plate element (1),
- wherein the plate element (1) preferably comprises at least one fluid connection element for connecting two chambers (3) of two plate elements (1) and for transporting heat by means of a fluid,
- wherein the plate element (1) preferably comprises at least one electrical plug element, which serves for the electrical connection of two plate elements (1).

7. System for at least partly modularly creating a wall, a ceiling and/or a floor of a room, having:
- a modular plate element (1) with a first support element (2) according to one of the preceding claims,
- wherein the first support element (2) comprises an inner element (5), in particular a fluid-conveying inner element (5), and a supporting outer element (6),
- a further modular plate element comprising:
- a further first support element (2) with at least one chamber (3) for mechanical stabilization and for transporting heat by means of a fluid,
- wherein the further first support element (2) likewise comprises an inner element (5), in particular a fluid-conveying inner element (5), and a supporting outer element (6), and
- wherein the fluid-conveying inner elements of the two support elements (2) are arranged lying one on top of the other, in particular lying one directly on top of the other.

8. System according to claim 7,
- wherein the chambers (3) of the first support elements (2) of the two modular plate elements (1) are oriented at different angles relative to each other, preferably are oriented between 45 degrees and 90 degrees relative to each other, during bonding or connection,
- wherein passage points, which allow fluid to flow from one chamber into the other chamber, are preferably formed at the point of intersection of two chambers (3) of the plate elements (1).

9. System according to claim 7 or 8,
- wherein for installation the system has a connection system, which is preferably composed of clips, rails and brackets, and which forms the plate elements connectable with respect to fluid and electricity, and/or
- wherein the system preferably comprises rails (S) for fastening to a wall, a ceiling and/or a floor of a room, in order to fasten a modular plate element (1) to the rails (S), and/or
- wherein the system preferably comprises an adhesive layer (K) for fastening to a wall, a ceiling and/or a floor of a room, in order to fasten a modular plate element (1) to the adhesive layer (K).

10. System according to one of claims 7 to 9,
- wherein at least two plate elements can be arranged flat next to each other, preferably seamlessly adjoin each other,
- wherein at least two plate elements can preferably be arranged one on top of the other, preferably seamlessly adjoin each other.

## Revendications

1. Elément modulaire en forme de plaque (1) pour réaliser au moins en partie une paroi, un plafond et/ou un plancher d'une pièce, comportant :
- un premier élément de support (2) avec au moins un caisson (3) pour la stabilisation mécanique et pour le transport de chaleur à l'aide d'un fluide ; et
- une peinture chauffante (4) permettant de chauffer la pièce à l'aide d'une technique infrarouge à basse température, dans lequel la peinture chauffante (4) comprend un mélange de matériaux électriquement conducteurs ;
- un élément réfléchissant (9) permettant de réfléchir le rayonnement infrarouge ;
**caractérisé en ce que** :
le premier élément de support (2) comprend un élément intérieur transporteur de fluide (5) et un élément extérieur (6) porteur réalisé sous la forme d'une plaque ; et
un élément de maintien réalisé sous la forme d'une plaque (10) est disposé au niveau du premier élément de support (2) ; et
**caractérisé en ce que** l'élément de maintien (10) est disposé au niveau du côté de l'élément intérieur (5) opposé à l'élément extérieur (6).

2. Elément modulaire en forme de plaque selon la revendication 1,
- dans lequel un élément de renforcement (7) destiné à réaliser le renforcement est disposé au niveau du premier élément de support (2), notamment au niveau de son élément extérieur (6), de préférence au niveau du côté de l'élément extérieur (6) opposé à l'élément intérieur (5) ;
- dans lequel l'élément de renforcement (7) destiné à réaliser le renforcement est de préférence réalisé sous la forme d'une structure alvéolaire ;
- dans lequel un deuxième élément de support (8) est de préférence disposé au niveau de l'élément de renforcement (7) ;
- dans lequel le deuxième élément de support (8) prend de préférence la forme d'une plaque.

3. Elément modulaire en forme de plaque selon la revendication 1 ou 2,
- dans lequel l'au moins un caisson (3) suit une quelconque courbe dans la pièce à l'intérieur de l'élément en forme de plaque (1), notamment à l'intérieur de l'élément intérieur (5) ;
- dans lequel au moins deux caissons (3) sont de préférence orientés parallèlement l'un par rapport à l'autre pour transporter un fluide dans une direction ;
- dans lequel au moins deux caissons (3) sont de préférence orientés dans une direction différente, notamment perpendiculairement l'un par rapport à l'autre, pour transporter un fluide dans deux directions ;
- dans lequel l'au moins un caisson (3) de l'élément de support (2) présente de préférence une forme de coupole en section transversale et/ou est réalisé en forme de demi-cercle ;
- dans lequel les deux extrémités opposées du côté ouvert de l'au moins un caisson (3) présentent de préférence en section transversale un écartement d'au moins un millimètre et de tout au plus deux centimètres ;
- dans lequel l'au moins un caisson (3) de l'élément de support (2) s'étend de préférence d'un bord latéral de l'élément en forme de plaque (1) jusqu'à un autre bord latéral de l'élément en forme de plaque (1) ;
- dans lequel l'au moins un caisson (3) de l'élément de support (2) s'étend de préférence sur toute la largeur et/ou la hauteur et/ou la longueur de l'élément en forme de plaque (1).

4. Elément modulaire en forme de plaque selon l'une quelconque des revendications précédentes,
- dans lequel l'élément de maintien (10) comprend la peinture chauffante (4) servant à chauffer la pièce et à chauffer de façon indirecte le fluide se trouvant à l'intérieur de l'élément intérieur (5) ;
- dans lequel l'élément de maintien (10) comprend de préférence un support (11) sur lequel un matériau conducteur est appliqué sous forme de pistes, de préférence sous forme de bandes de cuivre ;
- dans lequel l'élément de maintien (10) comprend de préférence la peinture chauffante (4), dans lequel la peinture chauffante (10) est de préférence disposée sur le matériau conducteur ;
- dans lequel l'élément de maintien (10) comprend de préférence un apprêt (12) notamment disposé sur la peinture chauffante (4) ;
- dans lequel l'élément de maintien (10) comprend de préférence un tissu (13) qui est notamment disposé sur l'apprêt (12) ;
- dans lequel l'élément de maintien (10) comprend de préférence un enduit (14) qui est notamment disposé sur le tissu (13) ;
- dans lequel (4) une couche ignifuge est de préférence disposée sur la peinture chauffante.

5. Elément modulaire en forme de plaque selon l'une quelconque des revendications précédentes,
- dans lequel l'élément réfléchissant (9) est disposé entre un élément intérieur (5) et un élément extérieur (6) pour réfléchir le rayonnement.

6. Elément modulaire en forme de plaque selon l'une quelconque des revendications précédentes,
- dans lequel l'élément en forme de plaque (1) comprend au moins un câble électrique ;
- dans lequel l'au moins un câble électrique est de préférence réalisé à partir d'un matériau conducteur ;
- dans lequel l'au moins un câble électrique est de préférence disposé à l'intérieur de l'au moins un caisson (3) ;
- dans lequel l'au moins un câble électrique est de préférence réalisé sous la forme d'une bande de cuivre appliquée à plat à l'intérieur de l'élément en forme de plaque (1) ;
- dans lequel l'élément en forme de plaque (1) comprend de préférence au moins un élément de liaison fluide afin de relier les deux caissons (3) des deux éléments en forme de plaque (1) et de transporter la chaleur à l'aide d'un fluide ;
- dans lequel l'élément en forme de plaque (1) comprend de préférence au moins un élément de fiche électrique servant à la connexion électrique des deux éléments en forme de plaque (1).

7. Système permettant de réaliser au moins en partie une paroi, un plafond et/ou un plancher d'une pièce, comportant :
- un élément modulaire en forme de plaque (1) avec un premier élément de support (2) selon l'une quelconque des revendications précédentes ;
- dans lequel le premier élément de support (2) comprend un élément intérieur (5), notamment un élément intérieur transporteur de fluide (5), et un élément extérieur (6) porteur ;
- un élément modulaire en forme de plaque supplémentaire, comprenant :
- un premier élément de support (2) supplémentaire avec au moins un caisson (3) pour la stabilisation mécanique et le transport de chaleur à l'aide d'un fluide ;
- dans lequel le premier élément de support (2) supplémentaire comprend également un élément intérieur (5), notamment un élément intérieur transporteur de fluide (5) et un élément extérieur (6) porteur ;
- dans lequel les éléments intérieurs transporteurs de fluide des deux éléments de support (2) sont disposés l'un sur l'autre, notamment directement l'un sur l'autre.

8. Système selon la revendication 7,
- dans lequel les caissons (3) des premiers éléments de support (2) des deux éléments modulaires en forme de plaque (1) sont orientés l'un par rapport à l'autre selon différents angles pour leur collage ou leur liaison, de préférence entre 45 degrés et 90 degrés ;
- dans lequel des points de passage sont de préférence formés au niveau du point d'intersection des deux caissons (3) des éléments en forme de plaque (1), lesdits points de passage lassant passer les fluides d'un caisson à l'autre.

9. Système selon la revendication 7 ou 8,
- dans lequel le système de montage présente un système de liaison de préférence composé de clips, rails et étriers et réalisé de façon à pouvoir relier les éléments en forme de plaque sur le plan des fluides et de l'électricité ; et/ou
- dans lequel le système comprend de préférence des rails (S) à fixer à une paroi, un plafond et/ou un plancher d'une pièce afin de fixer un élément modulaire en forme de plaque (1) aux rails (S) ; et/ou
- dans lequel le système comprend de préférence une couche de colle (K) pour la fixation à une paroi, à un plafond et/ou à un plancher d'une pièce, afin de fixer un élément modulaire en forme de plaque (1) à la couche de colle (K).

10. Système selon l'une quelconque des revendications 7 à 9,
- dans lequel les moins deux éléments en forme de plaque peuvent être disposés côte à côte à plat, de préférence raccordés l'un à l'autre sans soudure ;
- dans lequel au moins deux éléments en forme de plaque peuvent de préférence être agencés l'un sur l'autre, de préférence raccordés l'un à l'autre sans soudure.
